(19) Europäisches Patentamt
European Patent Office
Office européen des brevets

(11) **EP 3 298 080 B1**

(12) **EUROPEAN PATENT SPECIFICATION**

(45) Date of publication and mention
of the grant of the patent:
**05.07.2023  Bulletin 2023/27**

(21) Application number: **16797402.1**

(22) Date of filing: **20.05.2016**

(51) International Patent Classification (IPC):
*C08L 33/08* *(2006.01)*        *C09D 4/00* *(2006.01)*
*C09D 11/101* *(2014.01)*       *C09D 133/08* *(2006.01)*
*C09D 11/03* *(2014.01)*        *C09D 11/38* *(2014.01)*
*C09D 5/16* *(2006.01)*

(52) Cooperative Patent Classification (CPC):
**C09D 4/00; C09D 11/03; C09D 11/101; C09D 11/38**

(86) International application number:
**PCT/US2016/033591**

(87) International publication number:
**WO 2016/187569 (24.11.2016 Gazette 2016/47)**

(54) **SUPERHYDROPHOBIC UV CURABLE COATING**

**SUPERHYDROPHOBE UV-HÄRTBARE BESCHICHTUNG**

**REVÊTEMENT SUPER-HYDROPHOBE DURCISSABLE AUX UV**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.05.2015  US 201562164757 P**

(43) Date of publication of application:
**28.03.2018  Bulletin 2018/13**

(73) Proprietor: **Sun Chemical Corporation
Parsippany, NJ 07054 (US)**

(72) Inventors:
• **ZHANG, Yuemei
Ramsey, NJ 07446 (US)**

• **SCHOTTLAND, Philippe
Sparta, NJ 07871 (US)**
• **WEBSTER, Glenn
Geneva, IL 60134 (US)**

(74) Representative: **Carpmaels & Ransford LLP
One Southampton Row
London WC1B 5HA (GB)**

(56) References cited:
**WO-A1-2015/142558      US-A- 5 811 472
US-A- 5 811 472          US-A1- 2007 009 657
US-A1- 2007 092 644      US-A1- 2009 064 894
US-A1- 2011 135 905      US-A1- 2012 045 594**

**Description**

CROSS REFERENCE TO RELATED APPLICATIONS

This application claims priority to U.S. Provisional Application No. 62/164,757, filed May 21, 2015.

FIELD OF THE INVENTION

The present invention is related to hydrophobic coating and ink compositions that can be applied to a substrate to make the substrate water repellant. The present invention relates generally to hydrophobic hybrid coatings that can be dried and cured by a combination of solvent evaporation and energy curing. In certain embodiments, the hydrophobic hybrid coatings are superhydrophobic (or ultrahydrophobic). The hydrophobic coatings and inks are suitable for any use wherein a water repellant surface is desired. The present invention is also related to methods of applying the coating and ink compositions to provide a hydrophobic surface on a substrate.

BACKGROUND

A super hydrophobic and water repellant coating film or coating can be utilized for preventing water or other hydrophilic liquid or ice from sticking to and contaminating the surface of an object. Therefore, a super water repellant coating film or coating can be utilized, for example, for coating of windows, automotive windshields, electrical wires and power lines, insulators for high voltage power lines, outer walls of houses, outdoor furniture, evaporator fin surfaces of an air conditioner, roof materials, the outer shell of boats, the inner surfaces of pipes, printed and converted packaging materials, grocery and waste bags, disposable plates, cups and utensils, back sheets of disposable diapers, bottles, labels, medical devices, antenna and satellite dishes, solar panels, etc. It is expected that the super water-repellant coating will also expand to many other different applications.

Most prior art coatings are either solvent-based, or water-based, or UV curable compositions. The coatings are typically dried or cured via only one drying or curing process. See, for example, US 8,496,857; US 3,931,428; US 1014/0212592; US 2009/0064894; US 8,513,342; US 8,187,707; US 6,068,911; WO 2012/156173; WO 2012/003004; and US 2008/0156224.

US 7,943,234 discloses hydrophobic coatings comprising crosslinking polymers that have less than 1% mole% alkylenic reactive sites of unsaturation as a binder. Coatings containing polymers having more than 1% mole% alkylenic reactive sites of unsaturation become more hydrophilic.

WO 2010/096073 discloses flexible superhydrophobic microstructured films that can be attached to objects with an adhesive backing layer. US 2014/0309393 discloses hydrophobic polymer films prepared by blending particles into a hot polymer melt.

WO 01/92179 provides ultrahydrophobic substrates having reduced light scattering. The surface of the substrate is texturized by application of a surface active "phobing" agent comprising fluorine. US 2011/0250376 discloses a method whereby a surface of a substrate is made hydrophobic by texturizing it with a layer of a carbon nanotube array. The carbon nanotube array is formed using vacuum pyrolysis.

US 2006/0286305 discloses a hydrophobic coating composition comprising reactive nanoparticles. It is necessary to graft both reactive groups (e.g. acrylate groups) and apolar groups (e.g. fluoro groups) onto the nanoparticles. Adequate coatings are not obtained if the nanoparticles have only one of the groups grafted. WO 2013/042052 discloses hydrophobic coatings comprising particles upon which are grafted polydimethylsiloxanes. US5811472A relates to radiation curable hardcoat compositions which are useful for imparting abrasion resistance, weatherability, and improved moisture resistance to thermoplastic substrates when applied and cured thereon. US2009/064894A1 relates to water-based super-hydrophobic coating composition that when applied to a surface produces a self-cleaning surface. US2011/135905A1 relates to a high energy ray-curable composition, and more particularly to a high energy ray-curable composition which has excellent storage stability before curing. WO2015/142558A1 relates to a curable composition and, more specifically, to a curable composition suitable for forming a cured product having excellent physical properties and to a method of forming the cured product from the curable composition.

Although there are existing methods to coat a surface with a material to make the surface super-hydrophobic and super water-repellant, previous methods have several disadvantages. Most of those coatings are comprised of inorganic nano-particles, hydrophobic binders, and solvent. Most of these hydrophobic binders are either polymeric binders with extremely low ethylenically unsaturated groups, or low acrylate functionality monomers/oligomers having a non-polar backbone structure. It is generally believed that as the acrylate functionality increases, hydrophobicity decreases. Thus, monofunctional alkanes, silicones, and fluorocarbon res ins are significantly more hydrophobic than di- and multi-functional alkanes, and they are more commonly used in previous applications. For example, US 7,943,234 discloses that building some crosslinking structure between these polymer resins will improve the coating's resistance.

However, they teach that it is necessary to use polymeric binders that have less than about 1% mole% alkylenic reactive sites of unsaturation, and a molecular weight of 80,000 or higher. Therefore, only a limited amount of crosslinking points can be achieved.

US 7,943,234 further discloses hydrophobic crosslink materials which have at least two photoactivatable groups, such that upon UV radiation, one group can be activated and attached to the surface of the substrate. The remaining latent group can react with a polymer binder. However, it takes an extra step to make these photoactivatable crosslink materials, which is time consuming and adds to the cost. In addition, it is still not guaranteed that the majority of polymeric binder will be crosslinked due to high molecular weight and the low% mole% alkylenic reactive sites of these polymers. Significant portions of these non-crosslinked polymer binders can still be attacked by solvent, and can also become soft or can melt at elevated temperature, and possibly migrate to the coating surface to change the nanostructured topography, having a detrimental effect on the hydrophobicity of the coating.

Therefore, a need exists for coating compositions that can be highly crosslinked to achieve a more durable binder structure and topography and display robust hydrophobicity at elevated temperature and harsh solvent environment conditions.

## SUMMARY OF THE INVENTION

The present invention provides superhydrophobic hybrid solvent-based and energy curable coating or ink compositions. The compositions comprise alkylenically unsaturated monomers, optionally photoinitiators, organic or inorganic particles, and one or more solvents.

In one aspect, the present provides a hydrophobic hybrid solvent-based and energy curable coating or ink composition, comprising:

a) one or more (meth)acrylate monomers and/or oligomers containing alkylenic unsaturated reactive groups having an alkylenically unsaturated composite molar average functionality higher than 1.00;
b) polydimethylsiloxane-surface treated silica particles having a particle size of between about 1 nm and 30 microns; and
c) one or more solvents independently selected from the group consisting of aliphatic hydrocarbons, cyclic hydrocarbons, aromatic hydrocarbons, ketones, aldehydes, alcohols, ethers, esters, and combinations thereof;

wherein the ratio of silica particles to the non-volative organic content is form 0.1:1 to 4:1; and wherein when dried and cured, the coating or ink composition has a water contact angle of equal to or greater than 110 degrees.

In certain embodiments, the dried and cured coating or ink composition has a water roll off angle of less than 10 degrees.

In certain embodiments, the one or more monomers and/or oligomers react to form a polymer having alkylenic reactive sites of unsaturation.

In certain embodiments, the polymer having alkylenic reactive sites of unsaturation has greater than 1% mol% alkylenic reactive sites of unsaturation.

In certain embodiments, the ink or coating composition further comprises one or more photoinitiators.

In one aspect, the present invention provides a substrate comprising the dried and cured coating of the invention.

In another aspect, the present invention provides a method of producing a hydrophobic printed or coated surface comprising:

a) applying the ink or coating composition of the invention to a substrate;
b) drying the composition by air dry, air flow, oven, or other heat sources; and curing the composition using actinic radiation, or other energy sources;

wherein the dried and cured coating is tack-free; and wherein the dried and cured coating is superhydrophobic or near superhydrophobic.

## BRIEF DESCRIPTION OF THE DRAWINGS

Figure 1. Figure 1 is a schematic representation of the variables used in Young's equation for measuring contact angle.
Figure 2. Figure 2 is a schematic representation demonstrating the roll off angle of a droplet of water on a substrate.

## DETAILED DESCRIPTION OF THE INVENTION

The present invention relates generally to hydrophobic hybrid coatings that can be cured by a combination of solvent evaporation and energy curing (such as actinic radiation or thermal curing). In certain embodiments, the coatings are superhydrophobic (ultrahydrophobic) or near superhydrophobic. For the purposes of the present application, the terms "super hydrophobic" and "ultra-hydrophobic" are used interchangeably, and are defined as a cured coating surface that is extremely difficult to wet. That is, the contact angle of a water droplet on the coating surface exceeds 150°, and the roll off angle of a water droplet is less than 10°. Also included in the present invention are hybrid coatings that exhibit "near super hydrophobic" properties (i.e. the contact angle of a water droplet exceeds, 110°, or 120°, or 130°, or 140°, up to 149.9°; and a roll off angle of a water droplet is less than 20°). The coating preferably maintains its hydrophobicity at elevated temperatures.

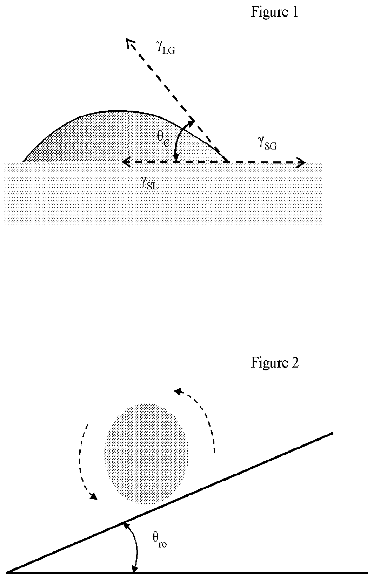

The contact angle is the angle, conventionally measured through the liquid, where a liquid/vapor interface meets a solid surface. It quantifies the wettability of a solid surface. The Young equation can be used to quantify contact angle by analyzing the forces acting on a fluid droplet resting on a solid surface surrounded by a gas. Figure 1 is a schematic of a liquid drop showing each value in the Young equation.

$$\gamma_{SG} = \gamma_{SL} + \gamma_{LG}\cos\theta$$

where

$\gamma_{SG}$ is the interfacial tension between the solid and gas
$\gamma_{SL}$ is the interfacial tension between the solid and liquid
$\gamma_{LG}$ is the interfacial tension between the liquid and gas
$\theta$ is the contact angle

Roll off angle is the lowest angle ($\theta_{ro}$) of the surface on which a droplet of water would roll off to the low point from the spot where it was dropped. A super hydrophobic surface would repel water, having a low water roll off angle, and make it extremely difficult for water to remain on the surface. Figure 2 is a schematic showing a droplet of liquid rolling off of a surface at the roll off angle.

The hydrophobic coatings and inks of the invention can be used for any purpose where hydrophobic or water repellant surfaces are desired. Such uses include, but are not limited to, coating of windows, automotive windshields, electrical wires and power lines, insulators for high voltage power lines, outer walls of houses, outdoor furniture, evaporator fin surfaces of an air conditioner, roof materials, the outer shell of boats, the inner surfaces of pipes, printed and converted packaging materials, grocery and waste bags, disposable plates, cups and utensils, back sheets of disposable diapers, bottles, labels, medical devices, antenna and satellite dishes, solar panels, and the like.

### Definitions

Unless defined otherwise, all technical and scientific terms used herein have the same meanings as commonly understood by one of ordinary skill in the art to which this invention belongs. All references cited in this specification are to be taken as indicative of the level of skill in the art. Nothing herein is to be construed as an admission that the invention is not entitled to antedate such disclosure by virtue of prior invention.

As used herein, the terms "comprises" and/or "comprising" specify the presence of the stated features, integers, steps, operations, elements, and/or components, but do not preclude the presence or addition of one or more other features, integers, steps, operations, elements, components, and/or groups thereof. Furthermore, to the extent that the terms "includes," "having," "has," "with," "composed," "comprised" or variants thereof are used in either the detailed description or the claims, such terms are intended to be inclusive in a manner similar to the term "comprising." In the specification and in the claims, the terms "including" and "comprising" are open-ended terms and should be interpreted to mean "including, but not limited to ...." These terms encompass the more restrictive terms "consisting essentially of" and "consisting of." The terms "comprising", "including", "characterized by" and "having" can be used interchangeably.

In this application, the use of the singular includes the plural unless specifically stated otherwise. As used herein, the singular forms "a," "an" and "the" are intended to include plural forms as well, unless the context clearly indicates otherwise. As well, the terms "a" (or "an"), "one or more" and "at least one" can be used interchangeably.

In this application, the use of "or" means "and/or" unless stated otherwise.

As used herein, ranges and amounts can be expressed as "about" a particular value or range. "About" is intended to also include the exact amount. Hence "about 5 percent" means "about 5 percent" and also "5 percent." "About means within typical experimental error for the application or purpose intended.

As used herein, the terms "coating(s)," "inks," "ink(s) or coating(s)," "ink or coating composition(s)," "coating or ink composition(s)" and "composition(s)," or any variation thereof, are used interchangeably.

As used herein, the term "(meth)acrylate" refers to both acrylates and methacrylates. Unless otherwise specified, when the terms "acrylate" or "methacrylate" are used alone, it is meant to encompass both acrylates and methacrylates.

As used herein, the term "polymer having alkylenic reactive sites of unsaturation" refers to the reacted (polymerized) product of the one or more monomers and/or oligomers of the invention.

As used herein, the term "non-volatile organic content" means the combination of monomers/oligomers, photoinitiators, and any other polymers, additives, resins, or colorants comprising the coating or ink compositions of the invention. That is, anything that is not the particle(s) or solvent is "non-volatile organic content."

As used herein, the term "solvent" refers to liquid components of the formulation that can be evaporated during a drying step. Such components include volatile organic materials, water, and mixtures thereof.

Throughout this disclosure, all parts and percentages are by weight (wt% or mass% based on the total weight) and all temperatures are in °C unless otherwise indicated.

As used herein, "functionality" refers to the number of moles of reactive alkylenic groups per mole of monomer and/or oligomer.

As used herein "alkylenically unsaturated composite molar average functionality" or "composite molar average functionality" means the average functionality of the totality of the monomers and/or oligomers in the coating or ink composition. The phrase "ethylenically unsaturated composite molar average functionality" is encompassed by the phrase "alkylenically unsaturated composite molar average functionality."

Super Hydrophobic Coating Compositions

The super hydrophobic coatings of the present invention are preferably composed of hydrophobic silica-based particles of diameters from 1 nm to 30 $\mu$m, one or more (meth)acrylate monomers and/or oligomers, optionally one or more photoinitiators, and one or more solvents. The alkylenically or ethylenically unsaturated composite molar average functionality of the monomers and/or oligomers is preferably greater than 1, or preferably greater than 1.25, or greater than 1.50, or greater than 1.75, or greater than 2.00, or greater than 2.50, and most preferably greater than or equal to 3.00. The reaction product of the monomers and/or oligomers is a polymer having greater than 1% mol% alkylenic reactive sites of unsaturation, e.g. vinyl double bonds.

In cases where monofunctional monomers and/or oligomers are blended with multifunctional monomers and/or oligomers, it is preferred that the monofunctional monomers and/or oligomers comprise a maximum of 7% of the total weight of the coating. For example, the monofunctional monomers and/or oligomers would comprise less than 5%, or less than 2%, or less than 1% of the total weight of the coating. In one embodiment, the coating would be essentially free of monofunctional monomers and/or oligomers.

The present invention surprisingly provides a composition and a method to apply, dry and cure the composition, to achieve a durable super hydrophobic and super water repellant surface. The surface displays a roll off angle for water of less than 10°, or less than 8°, or less than 3°. Yet it still has good acceptance to inks, adhesives, coatings, etc., and establishes a good bond between the substrate and the top layer as a tie layer. In addition, the hydrophobicity is well maintained at elevated temperatures. The present invention further provides a method to apply the composition on a substrate surface, and a method to dry (e.g. thermally) and then cure the composition using actinic radiation, or any suitable form of energy curing, to develop the durable super hydrophobic and super water repellant properties.

In one aspect, the present invention provides a hydrophobic hybrid solvent-based and energy curable coating or ink composition comprising:

a) one or more (meth)acrylate monomers and/or oligomers containing alkylenic unsaturated reactive groups having an alkylenically unsaturated composite molar average functionality higher than 1.00;
b) polydimethylsiloxane-surf ace treated silica particles having a particle size of between about 1 nm and 30 microns; and
c) one or more solvents independently selected from the group consisting of aliphatic hydrocarbons, cyclic hydrocarbons, aromatic hydrocarbons, ketones, aldehydes, alcohols, ethers, esters, and combinations thereof;

wherein the ratio of silica particles to the non-volatile organic content is from 0.1:1 to 4:1; and wherein the dried and cured coating or ink composition has a water contact angle of equal to or greater than 110 degrees.

In certain embodiments, the dried and cured coating or ink composition has a water roll off angle of less than 10 degrees.

In certain embodiments, the coating or ink compositions further comprise one or more photoinitiators.

In certain embodiments, the one or more monomers and/or oligomers react to form a polymer having alkylenic reactive sites of unsaturation.

In certain embodiments, the polymer having alkylenic reactive sites of unsaturation has greater than 1% mol% alkylenic reactive sites of unsaturation.

In one aspect, the present invention provides a substrate comprising the dried and cured coating of the invention.

In another aspect, the present invention provides a method of producing a hydrophobic printed or coated surface comprising:

a) applying the ink or coating composition of the invention to a substrate;
b) drying the composition by air dry, air flow, oven, or other heat sources; and curing the composition using actinic radiation, or other energy sources;

wherein the dried and cured coating is tack-free; and wherein the dried and cured coating is superhydrophobic or near superhydrophobic.

The compositions of the present invention comprise one or more acrylate monomers and/or oligomers that have a composite molar average functionality of greater than 1 (which can react to form a polymer having greater than 1 % mole% alkylenic reactive sites of unsaturation); optionally one or more photoinitiators, such as hydrophobic photoinitiators; one or more types of porous or non-porous particulate matter, such as polydimethylsiloxane surface treated hydrophobic silica, with a particle size of 1 nm to 30 $\mu$m; and one or more solvents, such as alcohols. The reaction product of the monomers and/or oligomers is a polymer having greater than 1 % mol% alkylenic reactive sites of unsaturation. The present invention provides a super hydrophobic and water repellant surface which is coated with a coating composition of the present invention.

The coatings provided herein can be applied on a substrate surface by any coating, printing or proofing methods, and dried by evaporation of volatile components using air flow or heat (or other comparable method), and cured using any form of energy curing, such as actinic radiation and thermal curing. Actinic radiation forms that can be used to cure the inks and coatings of the present invention include ultraviolet (UV) energy (including UVA and UVB), electron beam (EB) with or without photoinitiators, infrared (IR), light emitting diode (LED), or combinations thereof; any of which can be used alone or in combination with cationic curing. Any energy source that can produce actinic radiation can be used to cure the ink or coating compositions. For example, energy sources include high intensity mercury arc UV lamps, high pressure mercury lamps, medium pressure mercury lamps, low pressure mercury vapor lamps, microwave powered electrodeless mercury vapor lamps (Fusion lamps), xenon lamps, carbon arc lamps, lasers, UV LED, sunlight, and electron beam emitters. Incidental or intentional application of heat, such as via IR radiation or the heat given off by the actinic energy source, can be used in conjunction with the actinic radiation. The curing step of the hydrophobic coatings of the present invention can also be carried out by using any other suitable energy source, such as by adding a thermal initiator to the composition (such as a blocked peroxide; e.g. Luperox® from Sartomer/Arkema) and applying heat.

The inventive coatings provided herein can be prepared using any technique known in the art for preparation of coatings. For example, the components can be added into a container, and then mixed or milled until homogenous. The components of these coatings are generally mixed using a high speed stirrer to obtain the final composition.

The inventive coatings provided herein can be applied to any suitable substrate. Substrates include, but are not limited to, paper; paper board; plastics, including flexible film substrates; glass; metals; ceramic; granite; cement, etc. Examples of substrates include, but are not limited to, labels or strips (paper or plastic), cartons (such as folding cartons), displays (such as point of purchase displays), containers (e.g. glass/plastic/metal bottles for instance), glass surfaces (such as windows/glazing), covers (paper or plastic - e.g. magazine covers), tiles (ceramic), surgical tools and medical equipment (paper, plastic, glass), etc.

The hydrophobic coatings of the invention may be applied to the entire surface of the substrate, or may be applied to only a discrete region of the substrate. The coating may be printed as a continuous pattern/shape (e.g. a block or an oval) or as a non-continuous pattern to cover only select regions of the substrate. In certain embodiments, the hydrophobic coating can be applied as full or nearly full coverage, such as equal to or greater than 90% of the substrate surface. In other embodiments, the coating may be applied as more limited coverage, such as less than or equal to about 50% of the substrate surface. In other embodiments, the coating may be applied as more discrete coverage, such as less than or equal to about 20% of the substrate surface. Optionally, the coating may be applied in registration to the layer(s) of printing inks applied underneath (i.e. the coatings may be overprinted on text or graphics), without impacting the legibility of the text or graphics. Thus, although the coating has a high filler (particle) content, it exhibits good contact clarity. In addition, in certain embodiments, the printed hydrophobic coating provides a matting effect and a softer feel (soft touch effect) to the coated substrate (such as to a coated label or carton).

Solvents can be used either alone, or as a mixture of solvents. Broad classes of solvents that are used include aliphatic hydrocarbons, cyclic hydrocarbons, aromatic hydrocarbons, ketones, aldehydes, alcohols, ethers and esters, combinations thereof, and the like. A preferred class of solvents is alcohols, including, for example isopropyl alcohol, n- propyl alcohol, n-propyl acetate, etc., water; combinations thereof, and the like. The level of solvent can vary to change the viscosity of the coating to facilitate different printing methods. In certain embodiments, the solvents are present in an amount of 25 wt% to 85 wt%, based on the total weight of the coating composition. For example, the solvents can be present in an amount of 26 wt% to 81 wt%; or 30 wt% to 70 wt%; or 35 wt% to 65 wt%, based on the total weight of the coating or ink composition.

In certain embodiments the solvent comprises a mixture of one or more volatile organic solvents and water. The water may be present in an amount of 5 wt% to 95 wt%; or 5 wt% to 75 wt%; or 5 wt% to 50 wt%; or 5 wt% to 25 wt%; or 5 wt% to 10 wt%; or 10 wt% to 80 wt%; or 10 wt% to 50 wt%; or 3 wt% to 36 wt%, based on the total weight of the solvents.

The coating compositions contain one or more reactive monomers and/or oligomers, where the monomer and/or oligomer contains an acrylate or methacrylate group, or other reactive group such as a vinyl group. The level of functionality of the monomers and/or oligomers can vary, and monofunctional or multifunctional acrylates or combinations thereof can be selected. Multifunctional acrylates can be selected from among diacrylates, triacrylates, tetra-acrylates, pentaacrylates, hexaacrylates, and higher functionalities. Particularly preferred components are trimethylolpropane triacrylate (TMPTA), ethoxylated TMPTA, dipentaerythritol hexaacrylate (DPHA); or monomers with hydrophobic groups.

Suitable difunctional monomers and/or oligomers that can be used in the ink and coating compositions include, but are not limited to, alkoxylated aliphatic diacrylate, alkoxylated neopentyl glycol diacrylate, 1,4-butanediol diacrylate, 1,3-butylene glycol diacrylate, cyclohexane dimethanol diacrylate, diethylene glycol diacrylate, dipropylene glycol diacrylate, 1,6-hexanediol diacrylate, neopentyl glycol diacrylate, polyester diacrylate, polyethylene glycol (200) diacrylate, polyethylene glycol (400) diacrylate, polyethylene glycol (600) diacrylate, propoxylated neopentyl glycol diacrylate, propoxylated (2) neopentyl glycol diacrylate, tetraethylene glycol diacrylate, tricyclodecane dimethanol diacrylate, triethylene glycol diacrylate, tripropylene glycol diacrylate, the methacrylate versions thereof, combinations thereof, and the like.

Suitable trifunctional monomers and/or oligomers that can be used in the ink and coating compositions include, but are not limited to, ethoxylated (3) trimethylolpropane triacrylate, ethoxylated (6) trimethylolpropane triacrylate, ethoxylated (9) trimethylolpropane triacrylate, ethoxylated (15) trimethylolpropane triacrylate, ethoxylated (20) trimethylolpropane triacrylate, pentaerythritol triacrylate, propoxylated (3) glyceryl triacrylate, propoxylated (3) glyceryl triacrylate, propoxylated (5.5) glyceryl triacrylate, propoxylated (3) trimethylolpropane triacrylate, propoxylated (6) trimethylolpropane triacrylate, trimethylolpropane triacrylate , tris-(2-hydroxyethyl)-isocyanurate triacrylate, the methacrylate versions thereof, combinations thereof, and the like.

Suitable tetrafunctional, pentafunctional and higher functional monomers and/or oligomers that can be used in the ink and coating compositions include, but are not limited to, di-(trimethylolpropane)-tetraacrylate, ethoxylated (4) pentaerythritol tetraacrylate, polyester tetraacrylate, dipentaerythritol pentaacrylate and hexaacrylate and mixtures thereof, pentaacrylate ester, pentaerythritol tetraacrylate, the methacrylate versions thereof, combinations thereof, and the like.

In certain embodiments, exemplary reactive monomers include trimethylolpropane triacrylate (TMPTA), pentaerythritol tetraacrylate, dipentaerythritol hexaacrylate (DPHA) and ethoxylated trimethylolpropane triacrylate (EOTMPTA). Exemplary oligomers with different levels of functionality (i.e. mono-, di-, tri-, tetra-, penta-, or higher functionality) include silicone acrylates, fluorocarbon acrylates, epoxy acrylates, polyester acrylates, ethoxylated acrylates, polyamide acrylates, polyimide acrylates, and urethane acrylates and different types of methyl acrylates.

It should be noted that the monomers and/or oligomers selected for the compositions of the invention do not, in and of themselves, need to be hydrophobic in nature. Hydrophobic being defined as having a contact angle of 90° or higher, and hydrophilic being defined as having a contact angle lower than 90°. The important feature is that the final cured surface of the coating is hydrophobic, and preferably super hydrophobic or near super hydrophobic.

In certain embodiments, the monomers and/or oligomers are present in an amount of 10 wt% to 30 wt%, based on the total weight of the coating composition. For example, the monomers and/or oligomers can be present in an amount of 10 wt% to 25 wt%; or 10 wt% to 20 wt%; or 12 wt% to 25 wt%; or 12 wt% to 20 wt%; or 13 wt% to 25 wt%; or 13 wt% to 20 wt%; or 15 wt% to 30 wt%; or 15 wt% to 25 wt%; or 15 wt% to 20 wt%.

The energy curable compositions of the present invention may also contain inert, non-curable resins having no curable acrylic groups. Examples of inert resins include: poly(acrylates), poly(ester), poly(urethanes), poly(amides), ketone resins, aldehyde resins, alkyd resins, phenol-formaldehyde resins, rosin resins, hydrocarbon resins, alkyd resins or mixtures of the aforementioned. Inert resins can be present in an amount of 0 wt% to 55 wt%, based on the total weight of the coating or ink composition. For example, the inert resins may be present in an amount of 1 wt% to 25 wt%; or from about 2 wt% to about 15 wt%.

In certain embodiments, the coatings of the present application can contain one or more photoinitiators. Examples of photoinitiators that can be included in the ink and coating compositions include, but are not limited to, benzoin ethers, such as benzoin methyl ether, benzoin ethyl ether, and benzoin phenyl ether; alkylbenzoins, such as methylbenzoin, ethylbenzoin, propylbenzoin, butylbenzoin and pentylbenzoin; benzyl derivatives, such as benzyl-dimethylketal; 2,4,5-triaryl-imidazole dimers, such as 2-(o-chlorophenyl)-4,5-diphenylimidazole dimer, 2-(o-chloro-phenyl)-4,5-di(m-methoxyphenyl)imidazole dimer, 2-(o-fluorophenyl)-4,5-phenyl-imidazole dimer, 2-(o-methoxyphenyl)-4,5-diphenyl-imidazole dimer, 2-(p-methoxy-phenyl)-4,5-diphenylimidazole dimer, 2,4-di(p-methoxy-phenyl)-5-phenyl-imidazole dimer and 2-(2,4-dimethoxyphenyl)-4,5-diphenyl-imidazole dimer; acridine derivatives such as 9-phenylacridine and 1,7-bis(9,9'-aridinyl)heptane; N-phenylglycine; benzophenones, anthraquinones, thioxanthones and derivatives thereof, including chloro-benzophenone, 4-phenylbenzophenone, trimethyl-benzophenone, 3,3'-dimethyl-4-methoxybenzophenone, 4,4'-dimethylamino-benzophenone, 4,4'-bis(diethyl-amino)-benzophenone, acrylated benzophenone, methyl-o-benzoyl benzoate, isopropyl-thioxanthone, 2-chloro and 2-ethyl-thioxanthone, 2-benzyl-2-(dimethyl-amino)-4'-morpholino-butyrophenone and hydroxy benzophenone; acetophenone derivatives including 2,2-dimethoxy-2-phenyl-acetophenone, 2,2-diethoxyacetophenone, 2, 2-dimethoxy-2-phenylacetophene and 1-hydroxycyclohexylacetophenone; 2-hydroxy-2-methyl-1-phenylpropanone; 4-benzoyl-4'-methyl-diphenyl sulfide; ethyl 4-dimethyl-amino-benzoate; 2-ethylhydroquinone; (2,4,6-trimethylbenzoyl)diphenyl phosphine oxide (Irgacure® TPO, available from BASF, Munich, Germany); ethyl(2,4,6-trimethyl-benzoyl-phenyl phosphinate; α-hydroxy ketone photoinitiators, such as 1-hydroxy-cyclohexyl-phenyl ketone (e.g., Irgacure® 184 available from BASF), 2-hydroxy-2-methyl-1-phenylpropanone, 2-hydroxy-2-methyl-1-(4-isopropyl-phenyl)propanone, 2-hydroxy-2-methyl-1-(4-dodecylphenyl)propanone, 2-hydroxy-2-methyl-1-phenylpropanone and 2-hydroxy-2-methyl-1-[(2-hydroxyethoxy)-phenyl]-propanone; (2,6-dimethoxy-benzoyl)-2,4,4-trimethylpentyl phosphine oxide (e.g., commercial blends Irgacure® 1800, 1850, and 1700 available from BASF); 2,2-dimethoxyl-2-phenyl acetophenone (e.g., Irgacure® 651, available from BASF); bisacylphosphine oxide photoinitiators, such as bis(2,4,6-trimethylbenzoyl)phenyl-phosphine oxide (e.g., Irgacure® 819 from BASF), bis(2,6-dimethoxybenzoyl)-isooctyl-phosphine oxide and ethoxy (2,4,6-trimethyl-benzoyl) phenyl phosphine oxide (Irgacure® TPO-L from BASF), and combinations thereof. Preferred are photoinitiators that are hydrophobic in nature. Particularly preferred photoinitiators include, for example, methyl benzoyl formate, 1-hydroxycyclohexyl-phenyl ketone, ethyl (2, 4, 6-trimethylbenzoyl)-phenyl-phosphinate, combinations thereof, and the like.

In certain embodiments, the one or more photoinitiators are present in an amount of 0 wt% to 10 wt%, based on the total weight of the coating composition. For example, the photoinitiators may be present in an amount of 1 wt% to 10 wt%; or 2 wt% to 7 wt%; or 3wt% to 5 wt%.

The weight ratio of photoinitiators to monomers and/or oligomers is one consideration for creating hydrophobic coatings of the invention. Depending on the radiation dosage variation, the choice of monomers and/or oligomers, and coating thickness, the ratio will vary to achieve the ultimate desired cure conversion, inter-coat adhesion, hydrophobicity and other properties. In general, coatings cured under higher radiation dosage will need lower amounts of photoinitiator. In addition, photoinitiator is not needed for some types of radiation, such as electron beam (EB). In certain embodiments, the ratio of typical photoinitiator to monomers and/or oligomers is about 0.05:1 to about 2:1; or between about 0.1:1 to about 1:1; or between about 0.5:1 to about 1:1.

The compositions of the invention comprise one or more classes of particulate matter. The particles have a diameter of 1 nm to 30 μm. For example, the particles can have a diameter between 1 nm and 25 μm. The particles are polydimethylsiloxane (PDMS) surface treated hydrophobic silica with a particle size from 1nm to 30 μm.

The weight ratio of particles to the non-volatile organic content of the composition can affect hydrophobic properties, and is one consideration for preparing the inks and coatings of the present invention. The ratio will vary depending on the density of the particles, and a person of skill in the art will adjust the ratio (weight) of the particles to non-volatile organic content (weight) according to the ultimate property desired. In general, coatings made with low density particles will have lower particle concentration requirements. Conversely, coatings made with higher density particles will have higher particle concentration requirements. For example, silica particles may have varying densities, depending on the porosity and nature of the silica. The ratio of silicaparticles to the non-volatile organic content is 0.1:1 to about 4:1; or preferably between about 0.2:1 to about 3:1; or between about 0.2:1 to about 2:1; or particularly about 0.32:1 to about 1:1.

The coatings of the present invention may also contain one or more conventional resin types. Suitable resins include, but are not limited to, acrylic resins, urea aldehyde resins, polyester resin, aldehyde resins, epoxy resins, rosin ester resins, cellulose nitrate, cellulose acetobutyrate, vinyl chloride copolymers, melamine-formaldehyde resins polyurethane resins, polyimide resins, alkyd resins, phthalate resins, etc., including both aliphatic and aromatic types.

In certain embodiments, the one or more conventional resins are present in an amount of 5 wt% to 55 wt% based on the total weight of the composition. For example, the one or more conventional resins may be present in an amount of 5 wt% to 40 wt%; or 10 wt% to 30 wt%; or 15 wt% to 20 wt%; or 5 wt% to 10 wt%; or 5 wt% to 7 wt%.

The coatings of the present invention may further contain one or more conventional resins and materials used in non-energy curable inks. Suitable resins and other materials include, but are not limited to, oil, talc, pigment dispersant, gelled vehicles, and soft inert resins, such as polyvinylethyl ethers, poly(n-butyl) acrylate. In certain embodiments, the one or more conventional resins and materials used in non-energy curable inks are present in an amount of 5 wt% to 55 wt% based on the total weight of the composition. For example, the one or more conventional resins and materials used in non-energy curable inks may be present in an amount of 5 wt% to 40 wt%; or 10 wt% to 30 wt%; or 15 wt% to 20 wt%; or 5 wt% to 10 wt%; or 5 wt% to 7 wt%.

The coatings of the invention may also contain one or more additives, including, but not limited to waxes, silicones, fluorocarbons, ammonia, defoamers, stabilizers, dispersants, rheological modifiers, and the like. In certain embodiments, the one or more additives are present in an amount of 0.5 wt% to 5 wt% based on the total weight of the composition. For example, the one or more additives may be present in an amount of 1 wt% to 4 wt%; or 1 wt% to 3 wt%; or 1 wt% to 2 wt%.

The coatings and inks of the present invention may further include colorants. The colorants may be any pigment that can be employed in printing inks and coatings. The colorants may be organic or inorganic, and may be dyes or pigments. Typical colorants include, but are not limited to, inorganic pigments, such as Pigment White 6 (Titanium Dioxide), Pigment Black 7 (carbon black), Pigment Black 11 (Black Iron Oxide), Pigment Red 101 (Red Iron Oxide) and Pigment Yellow 42 (Yellow Iron Oxide), and organic pigments such as Pigment Yellow 1, Pigment Yellow 3, Pigment Yellow 12, Pigment Yellow 13, Pigment Yellow 14, Pigment Yellow 17, Pigment Yellow 37, Pigment Yellow 63, Pigment Yellow 65, Pigment Yellow 73, Pigment Yellow 74, Pigment Yellow 75, Pigment Yellow 83, Pigment Yellow 97, Pigment Yellow 98, Pigment Yellow 106, Pigment Yellow 114, Pigment Yellow 121, Pigment 26, Yellow 126, Pigment Yellow 136, Pigment Yellow 174, Pigment Yellow 176, Pigment Yellow 188, Pigment Orange 5, Pigment Orange 13, Pigment Orange 16, Pigment Orange 34, Pigment Red 2, Pigment Red 9, Pigment Red 14, Pigment Red 17, Pigment Red 22, Pigment Red 23, Pigment Red 37, Pigment Red 38, Pigment Red 41, Pigment Red 42, Pigment Red 112, Pigment Red 146, Pigment Red 170, Pigment Red 196, Pigment Red 210, Pigment Red 238, Pigment Blue 15, Pigment Blue 15:1, Pigment Blue 15:2, Pigment Blue 15:3, Pigment Blue 15:4, Pigment Green 7, Pigment Green 36, Pigment Violet 23 and the like. The dyes include but are not limited to azo dyes, anthraquinone dyes, xanthene dyes, azine dyes, combinations thereof and the like.

In certain embodiments, the colorants are present in an amount of about 0.5 wt% to about 20 wt%, based on the total weight of the composition. For example, the colorants may be present in an amount of 0.5 wt% to 15 wt%; or from 1 wt% to 20 wt%; or from 3 wt% to 15 wt%; or from 2 wt% to 10 wt%.

The dried and cured coating compositions of the present invention are water repellant. This means that greater than 90%, or greater than 95%, or greater than 99%, or greater than 99.5% of the coated surface area repels water. The dried and cured coating compositions of the present invention maintain their hydrophobicity after aging at elevated temperatures. For example, the coatings may be exposed to temperatures of about 35°C to about 85°C, or 40°C to 75°C, or 50°C to 65°C for prolonged periods of time, such as one, two, or more weeks. For example, the coatings may be heated in a 62°C oven for a period of two weeks. A large portion of the area coated with the dried and cured coating or ink composition of the invention maintains hydrophobicity after aging at elevated temperatures. For example, after heat aging, the portion of the coated area that still repels water is greater than 90%; or greater than 95%; or greater than 99%; or greater than 99.5%.

The ink and coating compositions of the invention can be applied using various printing techniques. Printing and coating methods include, but are not limited to, dip coating, roller coating, rod coating, flexographic printing, gravure printing, lithographic printing, ink jet printing, etc.

## EXAMPLES

The following examples, including experiments and results achieved, are provided for illustrative purposes only, and are not to be construed as limiting the claimed subject matter.

Test Methods

*Preparation of coating compositions*

The coating compositions were prepared by mixing particles (e.g. silica particles) with a liquid mixture of monomers and/or oligomers, photoinitiators, solvents, and other additives using a cowl blade mixer. Mixing was continued until all dry particles were wetted and uniformly distributed.

*Printing of coating compositions*

The coatings were printed on non-corona treated, non-chemically treated white polystyrene films, Leneta NWK unsealed paper test charts, and on commercially printed film and paper substrates using a K control coater. Bars of different sizes were chosen to print to different coating thickness, to achieve good coverage of different substrate surfaces. With one exception, all proofs were dried in the air for 2 minutes until a majority of solvent evaporated, and then cured through 400 watts per linear inch Hg UV lamp at a speed of 100 feet per minute. The exception, Example 6, was slower curing than the other examples, and thus required a speed of 50 feet per minute to achieve proper cure.

*Static water contact angle test*

Contact angle was measured using a Fibro DAT 1100 dynamic absorption and contact angle tester (Fibro Systems AB, Sweden), according to ASTM D-5725 Procedure B (for materials having a contact angle with water above about 100 degrees). A 4 μl drop of water was applied to the coating surface, and the contact angle was measured. A water contact angle of equal to or greater than 110 degrees was considered acceptable.

*Water roll offangle test*

The coated print surface was glued to an inclined plane of a well leveled bed of a TMI Coefficient of Friction Tester (Model 32-25). A drop of 15±2 μl of water was applied to the coated print surface. The test began at 0°. The angle of the inclined plane was gradually increased, until the water droplet started to roll. The angle at which the droplet of water began to roll was recorded as the water roll off angle. A water roll off angle of less than or equal to 10 degrees was considered acceptable.

*Aging test at elevated temperature*

The dried and cured print was wrapped in aluminum foil, and put into a 62°C vented oven for two weeks. At the end of the two weeks, the water contact angle and water roll off angle were again measured for the coated print surface. An acceptable result was considered to be that the portion of the printed area that repelled water after oven aging was > 90%. Preferably, the portion of the printed area that still repelled water was > 95%, or > 99%, or > 99.5%.

*Gloss test*

The gloss of dried and cured coating applied on various substrates was measured with a BYK-Gardner Micro-TRI-Gloss meter at an angle of 60 degrees.

It was surprisingly found that when the monomer and/or oligomer component has a composite molar average functionality greater than 1, preferably 2 or higher (and wherein the reaction product of the monomers and/or oligomers is a polymer having greater than 1% mole% alkylenic reactive sites of unsaturation), the cured coating surface has a higher water contact angle, and a lower roll off angle, than those monomers or oligomers with a composition molar average functionality of 1 or less at the same silica:non-volatile organic content weight ratio. This is quite different from what was previously believed in the art, that as the acrylate functionality increases hydrophobicity decreases, and therefore monofunctional alkenes are more hydrophobic than di- and multifunctional alkenes. Although some mono-functional monomers with significant hydrophobic backbone structure (e.g. alkane, fluorocarbon, or silicone) can also give a hydrophobic surface, the hydrophobicity is less robust, requiring a higher ratio of silica to non-volatile organic content to achieve the same level of hydrophobicity. The increased amount of silica makes the coated surface powdery, with less inter-coat adhesion, and less acceptance to ink, adhesive, and other materials.

Examples 1 to 5 were prepared using monomers with 3 or higher functionality. These coatings showed acceptable water contact angle and water roll off angle. Example 6 was prepared using a difunctional monomer. While slower curing than examples 1 to 5, example 6 exhibited acceptable water contact angle and water roll off angle when the UV cure speed was reduced to allow proper UV cure. Comparative example 7 was prepared using monofunctional monomers, and the water repellency was worse. In order to get similar hydrophobicity to examples 1 to 6, when using monofunctional monomers it was necessary to increase the silica ratio, as shown in comparative example 8. However, although having acceptable initial hydrophobicity, after aging at an elevated temperature, the hydrophobicity of some areas of the example 8 print was reduced, and some areas showed an increased water roll off angle.

## Examples 1 to 6: Hydrophobic coatings prepared using multifunctional monomers/oligomers

Hydrophobic coatings were prepared, using di-, tri- or higher functional monomers/oligomers, as shown in Tables 1 to 6 below.

**Table 1**: Example 1 coating composition

| Materials | Type | Wt% |
|---|---|---|
| Trimethylolpropane triacrylate (TMPTA) | Monomer | 10.5 |
| Methyl benzoylformate | Photoinitiator | 5.6 |
| Ethyl (2, 4, 6-trimethylbenzoyl)-phenyl-phosphinate | Photoinitiator | 3.2 |
| Isopropyl alcohol | Solvent | 72.6 |
| Aerosil R202 (Evonik) PDMS treated fume silica | Dry particles | 8.1 |
| **Total** | | **100.0** |

The coating of example 1 was printed using K bars #1, 2, and 3 on white polystyrene film. The cured print exhibited a water roll off angle of less than 5 degrees, and a water contact angle of higher than 150 degrees for all prints. The water roll off angle was maintained at less than 8 degrees, and the water contact angle was maintained at 150 degrees or higher in all areas of the prints after the aging test at elevated temperature.

**Table 2**: Example 2 coating composition

| Materials | Type | Wt% |
|---|---|---|
| Ethoxylated trimethylolpropane triacrylate (EO-TMPTA) | Monomer | 10.5 |
| Methyl benzoylformate | Photoinitiator | 5.6 |
| Ethyl (2, 4, 6-trimethylbenzoyl)-phenyl-phosphinate | Photoinitiator | 3.2 |
| Isopropyl alcohol | Solvent | 72.6 |
| Aerosil R202 (Evonik) PDMS treated fume silica | Dry particles | 8.1 |
| **Total** | | **100.0** |

The example 2 coating composition was printed using K bars #1, 2, and 3 on white polystyrene film. The cured prints exhibited a water roll off angle of less than 5 degrees, and water contact angle higher than 150 degrees for all prints. After two weeks of oven aging, the coating maintained its hydrophobicity (i.e. water roll off angle of less than 5 degrees, and a water contact angle higher than 150 degrees) for all three prints.

**Table 3**: Example 3 coating composition

| Materials | Type | Wt% |
|---|---|---|
| Trimethylolpropane triacrylate (TMPTA) | Monomer | 10.5 |
| 1-hydroxycyclohexyl-phenyl ketone | Photoinitiator | 5.6 |
| Ethyl (2, 4, 6-trimethylbenzoyl)-phenyl-phosphinate | Photoinitiator | 3.2 |
| Isopropyl alcohol | Solvent | 72.6 |
| Aerosil R202 (Evonik) PDMS treated fume silica | Dry particles | 8.1 |
| **Total** | | **100.0** |

The example 3 coating composition was printed using K bars #1, 2, and 3 on white polystyrene film. The cured prints exhibited a water roll off angle of less than 5 degrees, and water contact angle higher than 150 degrees for all prints. After two weeks of oven aging, the coating maintained its hydrophobicity (i.e. water roll off angle of less than 5 degrees, and a water contact angle higher than 150 degrees) for all three prints.

**Table 4**: Example 4 coating composition

| Materials | Type | Wt% |
|---|---|---|
| Pentaerythritol tetraacrylate | Monomer | 10.5 |
| Methyl benzoylformate | Photoinitiator | 5.6 |
| Ethyl (2, 4, 6-trimethylbenzoyl)-phenyl-phosphinate | Photoinitiator | 3.2 |
| Isopropyl alcohol | Solvent | 72.6 |
| Aerosil R202 (Evonik) PDMS treated fume silica | Dry particles | 8.1 |
| Total | | 100.0 |

The example 4 coating composition was printed using K bars #1, 2, and 3 on white polystyrene film. The cured prints exhibited a water roll off angle of less than 5 degrees, and water contact angle higher than 150 degrees for all prints. After two weeks of oven aging, the coating maintained its hydrophobicity (i.e. water roll off angle of less than 5 degrees, and a water contact angle higher than 150 degrees) for all three prints.

**Table 5**: Example 5 coating composition

| Materials | Type | Wt% |
|---|---|---|
| Trimethylolpropane triacrylate (TMPTA) | Monomer | 5.5 |
| Dipentaerythritol penta-/hexa acrylate | Monomer | 5 |
| Methyl benzoylformate | Photoinitiator | 5.6 |
| Ethyl (2, 4, 6-trimethylbenzoyl)-phenyl-phosphinate | Photoinitiator | 3.2 |
| Isopropyl alcohol | Solvent | 72.6 |
| Aerosil R202 (Evonik) PDMS treated fume silica | Dry particles | 8.1 |
| Total | | 100.0 |

The example 5 coating composition was printed using K bars #1, 2, and 3 on white polystyrene film. The cured prints exhibited a water roll off angle of less than 5 degrees, and water contact angle higher than 150 degrees for all prints. After two weeks of oven aging, the coating maintained its hydrophobicity (i.e. water roll off angle of less than 5 degrees, and a water contact angle higher than 150 degrees) for all three prints.

**Table 6**: Example 6 coating composition

| Materials | Type | Wt% |
|---|---|---|
| 1,6-hexanediol diacrylate (HDODA) | Monomer | 10.5 |
| Methyl benzoylformate | Photoinitiator | 5.6 |
| Ethyl (2, 4, 6-trimethylbenzoyl)-phenyl-phosphinate | Photoinitiator | 3.2 |
| Isopropyl alcohol | Solvent | 72.6 |
| Aerosil R202 (Evonik) PDMS treated fume silica | Dry particles | 8.1 |
| Total | | 100.0 |

The example 6 coating composition was printed using K bar #1 on white polystyrene film. The cured print exhibited a water roll off angle of less than 5 degrees, and a water contact angle of greater than 150 degrees.

**Examples 7 and 8: Hydrophobic coatings prepared using monofunctional monomers/oligomers**

Comparative examples 7 and 8, using only monofunctional monomers, were prepared. The formulations are shown in Tables 7 and 8 below.

**Table 7**: Comparative Example 7 coating composition

| Materials | Type | Wt% |
|---|---|---|
| Heptadecyl acrylate (monofunctional) | Monomer | 10.5 |
| Methyl benzoylformate | Photoinitiator | 5.6 |
| Ethyl (2, 4, 6-trimethylbenzoyl)-phenyl-phosphinate | Photoinitiator | 3.2 |
| Isopropyl alcohol | Solvent | 72.6 |
| Aerosil R202 (Evonik) PDMS treated fume silica | Dry particles | 8.1 |
| **Total** | | **100.0** |

The comparative example 7 coating composition was printed using K bar #1 on white polystyrene film. The cured print exhibited an initial water roll off angle of about 10 degrees. However, after oven aging, 80% of the printed area was no longer water repellant, having a water roll off angle greater than 10 degrees, which is considered to be an unacceptable result.

**Table 8**: Comparative Example 8 coating composition

| Materials | Type | Wt% |
|---|---|---|
| Heptadecyl acrylate (monofunctional) | Monomer | 7.4 |
| Methyl benzoylformate | Photoinitiator | 3.7 |
| Ethyl (2, 4, 6-trimethylbenzoyl)-phenyl-phosphinate | Photoinitiator | 2.2 |
| Isopropyl alcohol | Solvent | 66.5 |
| Aerosil R202 (Evonik) PDMS treated fume silica | Dry particles | 20.2 |
| **Total** | | **100.0** |

The comparative example 8 coating composition was printed using K bar #1 on white polystyrene film. The dried and cured print exhibited an initial water roll off angle of less than 7 degrees, and a water contact angle higher than 150 degrees. However, after oven aging, 20% of the printed area exhibited a water roll off angle of greater than 8 degrees, indicating that hydrophobicity was reduced.

**Example 9. Hydrophobic coating prepared containing silicone and wax additives**

A hydrophobic coating further containing silicone and wax additives was prepared according to the formulation in Table 9.

**Table 9**. Example 9 coating composition

| Materials | Type | Wt% |
|---|---|---|
| Alkoxylated pentaerythritol tetraacrylate | Oligomer | 13 |
| Oxy-phenyl-acetic acid 2-[2-oxo-2-phenyl-acetoxy-ethoxy]-ethylester and Oxy-phenyl-acetic acid 2-[2-hydroxy-ethoxy]-ethyl ester | Photoinitiator | 4 |
| Ethyl (2, 4, 6-trimethylbenzoyl)-phenyl-phosphinate | Photoinitiator | 3 |
| Silicone additive | Silicone | 1 |
| Carnauba wax (11.5%) in butyl glycol | Wax | 1 |
| Isopropyl alcohol | Solvent | 71 |
| Aerosil R202 (Evonik) PDMS treated fume silica | Dry particles | 7 |
| **Total** | | **100.0** |

The example 9 coating composition as printed using a Meyer #3 bar on unsealed Leneta NWK chart paper. The cured print exhibited an initial water roll off angle of less than 1 degree.

**Example 10. Hydrophobic coating prepared containing silicone and wax additives, and water as a co-solvent**

A hydrophobic coating composition containing silicone and wax additives, and further containing water as a co-solvent, was prepared according to the formulation in Table 10.

**Table 10**. Example coating composition

| Materials | Type | Wt% |
|---|---|---|
| Trimethylolpropane triacrylate (TMPTA) | Monomer | 12 |
| Alkoxylated pentaerythritol tetraacrylate | Oligomer | 1 |
| Oxy-phenyl-acetic acid 2-[2-oxo-2-phenyl-acetoxy-ethoxy]-ethylester and Oxy-phenyl-acetic acid 2-[2-hydroxy-ethoxy]-ethyl ester | Photoinitiator | 4 |

| Materials | Type | Wt% |
|---|---|---|
| Ethyl (2, 4, 6-trimethylbenzoyl)-phenyl-phosphinate | Photoinitiator | 3 |
| Silicone additive | Silicone | 1 |
| Carnauba wax (11.5%) in butyl glycol | Wax | 1 |
| Isopropyl alcohol | Solvent | 35.5 |
| Water | Solvent | 35.5 |
| Aerosil R202 (Evonik) PDMS treated fume silica | Dry particles | 7 |
| **Total** | | **100.0** |

The example 10 coating composition was printed using a Meyer #3 bar on unsealed Leneta NWK chart paper. The dried and cured print exhibited an initial water roll off angle of less than 1 degree.

**Comparative Example 11. Hydrophobic coating prepared with HMDS treated silica particles.**

A hydrophobic coating composition containing HMDS treated silica particles, instead of PDMS treated silica particles was prepared. The formulation is shown in Table 11 below.

Table 11. Example 11 coating composition

| Materials | Type | Wt% |
|---|---|---|
| Trimethylolpropane triacrylate (TMPTA) | Monomer | 12 |
| Alkoxylated pentaerythritol tetraacrylate | Oligomer | 1 |
| Oxy-phenyl-acetic acid 2-[2-oxo-2-phenyl-acetoxy-ethoxy]-ethylester and Oxy-phenyl-acetic acid 2-[2-hydroxy-ethoxy]-ethyl ester | Photoinitiator | 4 |
| Ethyl (2, 4, 6-trimethylbenzoyl)-phenyl-phosphinate | Photoinitiator | 3 |
| Silicone additive | Silicone | 1 |
| Carnauba wax (11.5%) in butyl glycol | Wax | 1 |
| Isopropyl alcohol | Solvent | 71 |
| Aerosil R812 (Evonik) HMDS treated fume silica | Dry particles | 7 |
| **Total** | | **100.0** |

The example 11 coating composition was printed using a Meyer #3 bar on unsealed Leneta NWK chart paper. The dried cured print exhibited an initial water roll off angle of 25 degrees, and was considered not to be water-repellant and an example of an unacceptable result. These results suggest that HMDS treated silica particles are not as effective as PDMS treated silica particles for producing a superhydrophobic coating.

**Example 12. Hydrophobic coating prepared containing a higher percentage of monomer**

The example 12 coating was prepared according to the formulation shown in Table 12. The monomer was included in an amount of 20 wt%.

Table 12. Example 12 coating composition

| Materials | Type | Wt% |
|---|---|---|
| Trimethylolpropane triacrylate (TMPTA) | Monomer | 20 |
| Alkoxylated pentaerythritol tetraacrylate | Oligomer | 4 |
| Oxy-phenyl-acetic acid 2-[2-oxo-2-phenyl-acetoxy-ethoxy]-ethylester and Oxy-phenyl-acetic acid 2-[2-hydroxy-ethoxy]-ethyl ester | Photoinitiator | 6 |
| Ethyl (2, 4, 6-trimethylbenzoyl)-phenyl-phosphinate | Photoinitiator | 5 |
| Silicone additive | Silicone | 2 |
| Carnauba wax (11.5%) in butyl glycol | Wax | 4 |
| Isopropyl alcohol | Solvent | 50 |
| Aerosil R202 (Evonik) PDMS treated fume silica | Dry particles | 9 |
| **Total** | | **100.0** |

The example 12 coating was printed using a Meyer #3 bar on unsealed Leneta NWK chart paper. The dried and cured print exhibited an initial water roll off angle of less than 4 degrees.

**Example 13. Hydrophobic coating prepared using an alternative solvent**

The example 13 coating was prepared according to the formulation shown in Table 13. Butyl acetate was used as the solvent, instead of isopropyl alcohol.

Table 13. Example 13 coating composition.

| Materials | Type | Wt% |
|---|---|---|
| Trimethylolpropane triacrylate (TMPTA) | Monomer | 12 |
| Alkoxylated pentaerythritol tetraacrylate | Oligomer | 1 |
| Oxy-phenyl-acetic acid 2-[2-oxo-2-phenyl-acetoxy-ethoxy]-ethylester and Oxy-phenyl-acetic acid 2-[2-hydroxy-ethoxy]-ethyl ester | Photoinitiator | 4 |
| Ethyl (2, 4, 6-trimethylbenzoyl)-phenyl-phosphinate | Photoinitiator | 3 |
| Silicone additive | Silicone | 1 |
| Carnauba wax (11.5%) in butyl glycol | Wax | 1 |
| Butyl acetate | Solvent | 71 |
| Aerosil R202 (Evonik) PDMS treated fume silica | Dry particles | 7 |

| Materials | Type | Wt% |
|---|---|---|
| Total | | 100.0 |

The example 13 coating composition was printed using a Meyer #3 bar on unsealed Leneta NWK chart paper. The dried cured print exhibited an initial water roll off angle of less than 1 degree.

**Example 14. Hydrophobic coating applied over printed graphics**

The coatings prepared in examples 9-12 were also applied using a Meyer #3 bar over commercially printed solvent based and water based inks applied on paper and metalized-paper substrates. The dried and cured prints exhibited an initial water roll off angle of less than 1 degree, and additionally appeared transparent with no visual reduction in the clarity or contrast of printed graphics. The gloss level of printed graphics was reduced to a uniform dull or matte finish exhibiting a gloss of less than 10 degrees measured at an angle of 60 degrees.

The uncoated substrate used in this example had a contact angle that was below 90 degrees, and a water roll off angle generally greater than 20 degrees. Water droplets applied on the uncoated substrate exhibited a tendency to "stick" to the surface and often required physical force (shaking) to start moving. Contact angle may be time dependent on uncoated substrate - especially paper - due to water absorption/penetration into the substrate. Such water penetration could cause significant substrate deformation such as curling or wrinkling if a large amount of water is applied, as seen with the uncoated paper labels of this example. By coating the substrate and creating a surface with a low roll off angle and high contact angle, the hydrophobic coatings of this example protect the pater labels against those deformations.

The examples show that superhydrophobic coatings can be prepared using multifunctional alkylenically reactive monomers and/or oligomers having a composite molar average functionality of higher than 1.00. The coating compositions are hybrid solvent-based and energy curable.

**Claims**

1. A hydrophobic hybrid solvent-based and energy curable coating or ink composition, comprising:

    a) one or more (meth)acrylate monomers and/or oligomers containing alkylenic unsaturated reactive groups having an alkylenically unsaturated composite molar average functionality higher than 1.00;
    b) polydimethylsiloxane-surface treated silica particles having a particle size of between about 1 nm and 30 microns; and
    c) one or more solvents independently selected from the group consisting of aliphatic hydrocarbons, cyclic hydrocarbons, aromatic hydrocarbons, ketones, aldehydes, alcohols, ethers, esters, and combinations thereof;
    wherein the ratio of silica particles to the non-volatile organic content is from 0.1:1 to 4:1; and
    wherein when dried and cured, the coating or ink composition has a water contact angle of equal to or greater than 110 degrees;
    wherein the contact angle is measured using a Fibro DAT 1100 dynamic absorption and contact angle tester (Fibro Systems AB, Sweden), according to ASTM D-5725 Procedure B.

**2.** The coating or ink composition of claim 1, wherein the dried and cured coating or ink composition has a water roll off angle of less than or equal to 10 degrees;
wherein the roll off angle is the lowest angle of the surface on which a droplet of water would roll off to the low point from the spot where it was dropped, measured according to method described in the description.

**3.** The coating or ink composition of claim 1, wherein the one or more monomers and/or oligomers react to form a polymer having alkylenic reactive sites of unsaturation, preferably wherein the polymer having alkylenic reactive sites of unsaturation has greater than 1% mol% alkylenic reactive sites of unsaturation.

**4.** The coating or ink composition of claim 1, wherein the one or more monomers and/or oligomers have an alkylenically unsaturated composite molar functionality of higher than 1.25, e.g. higher than 1.50, higher than 1.75, higher than 2.00, higher than 2.50, higher than 2.75, or higher than 3.00.

**5.** The coating or ink composition of any one of claims 1 to 4, wherein the one or more monomers and/or oligomers are ethylenically unsaturated, preferably wherein the one or more monomers and/or oligomers are acrylates or methacrylates, e.g. wherein the one or monomers are independently selected from the group consisting of trimethylolpropane triacrylate, ethoxylated trimethylolpropane triacrylate, pentaerythritol triacrylate, propoxylated glyceryl triacrylate, and tris-(2-hydroxyethyl)-isocyanurate triacrylate, di-(trimethylolpropane)-tetraacrylate, ethoxylated (4) pentaerythritol tetraacrylate, polyester tetraacrylate, dipentaerythritol pentaacrylate, pentaacrylate ester and pentaerythritol tetraacrylate, alkoxylated aliphatic diacrylate, alkoxylated neopentyl glycol diacrylate, 1,4-butanediol diacrylate, 1,3-butylene glycol diacrylate, cyclohexane dimethanol diacrylate, diethylene glycol diacrylate, dipropylene glycol diacrylate, 1,6-hexanediol diacrylate, neopentyl glycol diacrylate, polyester diacrylate, propoxylated neopentyl glycol diacrylate, propoxylated (2) neopentyl glycol diacrylate, tetraethylene glycol diacrylate, tricyclodecane dimethanol diacrylate, triethylene glycol diacrylate and tripropylene glycol diacrylate, acrylated silicone, acrylated fluorocarbon resin, acrylated alkanes, the methacrylate versions thereof, and combinations thereof, or wherein the one or more oligomers are independently selected from the group consisting of silicone acrylates, fluorocarbon acrylate, epoxy acrylates, polyester acrylates, ethoxylated acrylates, unsaturated polyesters, polyamide acrylates, polyimide acrylates, and urethane acrylates, the methacrylate versions thereof, and combinations thereof; wherein each oligomer is independently mono-, di-, tri-, tetra-, or higher functional.

**6.** The coating or ink composition of claim 1, further comprising one or more photoinitiators, preferably wherein the one or more photoinitiators are independently selected from the group consisting of methyl benzoyl formate; 1-hydroxycyclohexyl- phenyl ketone; ethyl(2,4,6-trimethylbenzoyl)-phenyl-phosphinate; and combinations thereof.

**7.** The coating or ink composition of any one of claims 1 to 6, wherein:

a) the one or more monomers and/or oligomers are present in an amount of 10 wt% to 30 wt%, based on the total weight of the coating or ink composition;
b) one or more photoinitiators are present in an amount of 0 wt% to 10 wt%, based on the total weight of the coating or ink composition; and
c) the one or more solvents is present in an amount of 25 wt% to 85 wt%, based on the total weight of the coating or ink composition.

**8.** The coating or ink composition of claim 1, wherein the ratio of particles to non-volatile organic content is 0.2:1 to 3:1, preferably 0.2:1 to 2:1, or 0.32:1 to 1:1.

**9.** The coating or ink composition of claim 1, wherein the composition is superhydrophobic, such that the contact angle of a water droplet on the coating surface exceeds 150°, and the roll off angle of a water droplet is less than 10°.

**10.** The coating or ink composition of claim 1, wherein the dried and cured coating exhibits one of the following properties:

(i) a water contact angle equal to or greater than 150 degrees, and a water roll off angle of less than or equal to 10 degrees;
(ii) a water contact angle equal to or greater than 150 degrees, and a water roll off angle of less than or equal to 8 degrees;
(iii) a water contact angle equal to or greater than 140 degrees, and a water roll off angle of less than or equal to 20 degrees;
(iv) a water contact angle equal to or greater than 130 degrees, and a water roll off angle of less than or equal to 20 degrees;
(v) a water contact angle equal to or greater than 120 degrees, and a water roll off angle of less than or equal to 20 degrees;
(vi) a water contact angle equal to or greater than 110 degrees, and a water roll off angle of less than or equal to 20 degrees;
(vii) maintains its hydrophobicity after exposure to a temperature of 35°C to 85°C for a period of two weeks.

11. The coating or ink composition of any one of claims 1 to 10, further comprising one or more of the following:

(i) a colorant;
(ii) one or more conventional resins,
preferably wherein the one or more conventional resins are independently selected from the group consisting of acrylic resins, urea aldehyde resins, polyester resin, aldehyde resins, epoxy resins, rosin ester resins, cellulose nitrate, cellulose acetobutyrate, vinyl chloride copolymers, melamine-formaldehyde resins polyurethane resins, polyimide resins, alkyd resins, phthalate resins, and combinations thereof;
(iii) one or more conventional resins and other materials used in non-energy curable inks and coating, preferably wherein the one or more conventional resins and other materials used in non-energy curable inks and coatings are independently selected from the group consisting of oil, talc, pigment dispersant, gelled vehicles, soft inert resins, polyvinylethyl ethers, poly(n-butyl)acrylate, and combinations thereof; and
(iii) one or more additives,

preferably wherein the one or more additives are independently selected from waxes, silicones, fluorocarbons, ammonia, defoamers, stabilizers, dispersants, rheological modifiers, and combinations thereof.

12. A coated substrate comprising the dried and cured coating or ink composition of any one of claims 1 to 11, preferably wherein the coating is applied over equal to or greater than 90% of the substrate surface, or wherein the coating is applied over less than or equal to 50% of the substrate surface, or wherein the coating is applied over less than or equal to 20% of the substrate surface.

13. The coated substrate of claim 12, wherein greater than or equal to 90% of the coated surface maintains hydrophobicity after exposure to a temperature of 35°C to 85°C for a period of two weeks.

14. A coated substrate comprising printed text or graphics, wherein the hydrophobic coating of any one of claims 1 to 11 is applied over the printed text or graphics, and the hydrophobic coating is dried and cured, preferably wherein the dried and cured hydrophobic coating appears transparent, and there is no visual reduction in the clarity and contrast of the printed text or graphics, or wherein the gloss level of the printed text or graphics is reduced to a uniform dull or matte finish, exhibiting a gloss of less than 10 degrees measured at an angle of 60 degrees.

15. A method of providing a hydrophobic printed or coated surface comprising:

a) applying the ink or coating composition of any one of claims 1 to 11 to a substrate;
b) drying the composition by air dry, air flow, oven, or other heat sources; and curing the composition using actinic radiation, or any other suitable energy source;
wherein the dried and cured coating is tack-free,
preferably wherein the dried and cured coating is superhydrophobic, having a water contact angle of equal to or greater than 150 degrees, or is near super hydrophobic, having a water contact angle of 140 degrees to 149.9 degrees.

**Patentansprüche**

1. Hydrophobe, hybride, energiehärtbare Beschichtungs- oder Tintenzusammensetzung auf Lösungsmittelbasis, umfassend:

a) ein oder mehrere (Meth)acrylatmonomere und/oder -oligomere, die alkylenisch ungesättigte reaktionsfähige Gruppen mit einer zusammengesetzten mittleren molaren alkylenisch ungesättigten Funktionalität von höher als 1,00 enthalten;
b) Polydimethylsiloxan-oberflächenbehandelte Siliciumdioxidpartikel mit einer Partikelgröße von zwischen etwa 1 nm und 30 Mikrometer; und

c) ein oder mehrere Lösungsmittel, unabhängig ausgewählt aus der Gruppe bestehend aus aliphatischen Kohlenwasserstoffen, cyclischen Kohlenwasserstoffen, aromatischen Kohlenwasserstoffen, Ketonen, Aldehyden, Alkoholen, Ethern, Estern und Kombinationen davon;

wobei das Verhältnis von Siliciumdioxidpartikeln zu dem nichtflüchtigen organischen Gehalt von 0,1:1 bis 4:1 beträgt; und

wobei die Beschichtungs- oder Tintenzusammensetzung, wenn getrocknet und gehärtet, einen Wasserkontaktwinkel von gleich oder größer als 110 Grad aufweist;

wobei der Kontaktwinkel unter Verwendung eines Fibro DAT 1100 Prüfgeräts für dynamische Absorption und Kontaktwinkel (Fibro Systems AB, Schweden) gemäß ASTM D-5725, Verfahren B, gemessen wird.

2. Beschichtungs- oder Tintenzusammensetzung gemäß Anspruch 1, wobei die getrocknete und gehärtete Beschichtungs- oder Tintenzusammensetzung einen Wasserabrollwinkel von kleiner als oder gleich 10 Grad aufweist; wobei der Abrollwinkel der niedrigsten Winkel der Oberfläche ist, auf der ein Wassertröpfchen von dem Punkt, an dem es aufgetropft wurde, zu dem tiefsten Punkt abrollen würde, gemessen gemäß dem in der Beschreibung beschriebenen Verfahren.

3. Beschichtungs- oder Tintenzusammensetzung gemäß Anspruch 1, wobei das eine oder die mehreren Monomere und/oder Oligomere reagieren, um ein Polymer mit alkylenischen reaktionsfähigen Unsättigungsstellen zu bilden, wobei das Polymer mit alkylenischen reaktionsfähigen Unsättigungsstellen vorzugsweise mehr als 1 mol-% alkylenische reaktionsfähige Unsättigungsstellen aufweist.

4. Beschichtungs- oder Tintenzusammensetzung gemäß Anspruch 1, wobei das eine oder die mehreren Monomere und/oder Oligomere eine zusammengesetzte molare alkylenisch ungesättigte Funktionalität von höher als 1,25, z.B. höher als 1,50, höher als 1,75, höher als 2,00, höher als 2,50, höher als 2,75 oder höher als 3,00 aufweisen.

5. Beschichtungs- oder Tintenzusammensetzung gemäß einem der Ansprüche 1 bis 4, wobei das eine oder die mehreren Monomere und/oder Oligomere ethylenisch ungesättigt sind, wobei das eine oder die mehreren Monomere und/oder Oligomere vorzugsweise Acrylate oder Methacrylate sind, z.B. wobei das eine oder die mehreren Monomere unabhängig ausgewählt sind aus der Gruppe bestehend aus Trimethylolpropantriacrylat, ethoxyliertem Trimethylolpropantriacrylat, Pentaerythritoltriacrylat, propoxyliertem Glyceryltriacrylat und Tris(2-hydroxyethyl)isocyanurattriacrylat, Di(trimethylolpropan)tetraacrylat, ethoxyliertem (4)-Pentaerythritoltetraacrylat, Polyestertetraacrylat, Dipentaerythritolpentaacrylat, Pentaacrylatester und Pentaerythritoltetraacrylat, alkoxyliertem aliphatischem Diacrylat, alkoxyliertem Neopentylglycoldiacrylat, 1,4-Butandioldiacrylat, 1,3-Butylenglycoldiacrylat, Cyclohexandimethanoldiacrylat, Diethylenglycoldiacrylat, Dipropylenglycoldiacrylat, 1,6-Hexandioldiacrylat, Neopentylglycoldiacrylat, Polyesterdiacrylat, propoxyliertem Neopentylglycoldiacrylat, propoxyliertem (2)-Neopentylglycoldiacrylat, Tetraethylenglycoldiacrylat, Tricyclodecandimethanoldiacrylat, Triethylenglycoldiacrylat und Tripropylenglycoldiacrylat, acryliertem Silicon, acryliertem Fluorkohlenstoffharz, acrylierten Alkanen, den Methacrylatversionen davon und Kombinationen davon, oder wobei das eine oder die mehreren Oligomere unabhängig ausgewählt sind aus der Gruppe bestehend aus Siliconacrylaten, Fluorkohlenstoffacrylat, Epoxyacrylaten, Polyesteracrylaten, ethoxylierten Acrylaten, ungesättigten Polyestern, Polyamidacrylaten, Polyimidacrylaten und Urethanacrylaten, den Methacrylatversionen davon und Kombinationen davon; wobei jedes Oligomer unabhängig mono-, di-, tri-, tetra- oder höherfunktionell ist.

6. Beschichtungs- oder Tintenzusammensetzung gemäß Anspruch 1, ferner umfassend einen oder mehrere Photoinitiatoren, wobei der eine oder die mehreren Photoinitiatoren vorzugsweise unabhängig ausgewählt sind aus der Gruppe bestehend aus Methylbenzoylformiat; 1-Hydroxycyclohexylphenylketon; Ethyl(2,4,6-trimethylbenzoyl)phenylphosphonat; und Kombinationen davon.

7. Beschichtungs- oder Tintenzusammensetzung gemäß einem der Ansprüche 1 bis 6, wobei:

a) das eine oder die mehreren Monomere und/oder Oligomere in einer Menge von 10 Gew.-% bis 30 Gew.-%, bezogen auf das Gesamtgewicht der Beschichtungs- oder Tintenzusammensetzung, vorhanden sind;

b) ein oder mehrere Photoinitiatoren in einer Menge von 0 Gew.-% bis 10 Gew.-%, bezogen auf das Gesamtgewicht der Beschichtungs- oder Tintenzusammensetzung, vorhanden sind; und

c) das eine oder die mehreren Lösungsmittel in einer Menge von 25 Gew.-% bis 85 Gew.-%, bezogen auf das Gesamtgewicht der Beschichtungs- oder Tintenzusammensetzung, vorhanden sind.

8. Beschichtungs- oder Tintenzusammensetzung gemäß Anspruch 1, wobei das Verhältnis von Partikeln zu nichtflüchtigem organischem Gehalt von 0,2:1 bis 3:1, vorzugsweise 0,2:1 bis 2:1 oder 0,32:1 bis 1:1, beträgt.

9. Beschichtungs- oder Tintenzusammensetzung gemäß Anspruch 1, wobei die Zusammensetzung superhydrophob ist, so dass der Kontaktwinkel eines Wassertröpfchens auf der Beschichtungsoberfläche größer als 150° ist und der Abrollwinkel eines Wassertröpfchens kleiner als 10° ist.

10. Beschichtungs- oder Tintenzusammensetzung gemäß Anspruch 1, wobei die getrocknete und gehärtete Beschichtung eine oder mehrere der folgenden Eigenschaften aufweist:

    (i) einen Wasserkontaktwinkel von gleich oder größer als 150 Grad und einen Wasserabrollwinkel von kleiner als oder gleich 10 Grad;
    (ii) einen Wasserkontaktwinkel von gleich oder größer als 150 Grad und einen Wasserabrollwinkel von kleiner als oder gleich 8 Grad;
    (iii) einen Wasserkontaktwinkel von gleich oder größer als 140 Grad und einen Wasserabrollwinkel von kleiner als oder gleich 20 Grad;
    (iv) einen Wasserkontaktwinkel von gleich oder größer als 130 Grad und einen Wasserabrollwinkel von kleiner als oder gleich 20 Grad;
    (v) einen Wasserkontaktwinkel von gleich oder größer als 120 Grad und einen Wasserabrollwinkel von kleiner als oder gleich 20 Grad;
    (vi) einen Wasserkontaktwinkel von gleich oder größer als 110 Grad und einen Wasserabrollwinkel von kleiner als oder gleich 20 Grad;
    (vii) bewahrt ihre Hydrophobie nach Exposition gegenüber einer Temperatur von 35 °C bis 85 °C für einen Zeitraum von zwei Wochen.

11. Beschichtungs- oder Tintenzusammensetzung gemäß einem der Ansprüche 1 bis 10, ferner umfassend eines oder mehrere der folgenden:

    (i) einen Farbstoff;
    (ii) ein oder mehrere herkömmliche Harze,
    wobei das eine oder die mehreren herkömmlichen Harze vorzugsweise unabhängig ausgewählt sind aus der Gruppe bestehend aus Acrylharzen, Harnstoff-Aldehyd-Harzen, Polyesterharz, Aldehydharzen, Epoxyharzen, Kolophoniumesterharzen, Cellulosenitrat, Celluloseacetobutyrat, Vinylchlorid-Copolymeren, Melamin-Formaldehyd-Harzen, Polyurethanharzen, Polyimidharzen, Alkydharzen, Phthalatharzen und Kombinationen davon;
    (iii) ein oder mehrere herkömmliche Harze und andere Materialien, die in energiefrei härtbaren Tinten und Beschichtungen verwendet werden, wobei das eine oder die mehreren herkömmlichen Harze und anderen Materialien, die in energiefrei härtbaren Tinten und Beschichtungen verwendet werden, unabhängig ausgewählt sind aus der Gruppe bestehend aus Öl, Talkum, Pigmentdispergiermittel, gelierten Trägern, weichen inerten Harzen, Polyvinylethern, Poly(n-butyl)acrylat und Kombinationen davon; und
    (iii) einen oder mehrere Zusatzstoffe,

    wobei der eine oder die mehreren Zusatzstoffe vorzugsweise unabhängig ausgewählt sind aus Wachsen, Siliconen, Fluorkohlenstoffen, Ammoniak, Entschäumern, Stabilisatoren, Dispergiermitteln, Rheologiemodifikatoren und Kombinationen davon.

12. Beschichtetes Substrat, umfassend die getrocknete und gehärtete Beschichtungs- oder Tintenzusammensetzung gemäß einem der Ansprüche 1 bis 11, wobei die Beschichtung vorzugsweise über gleich oder mehr als 90 % der Substratoberfläche aufgebracht ist oder wobei die Beschichtung über weniger als oder gleich 50 % der Substratoberfläche aufgebracht ist oder wobei die Beschichtung über weniger als oder gleich 20 % der Substratoberfläche aufgebracht ist.

13. Beschichtetes Substrat gemäß Anspruch 12, wobei mehr als oder gleich 90 % der beschichteten Oberfläche Hydrophobie nach Exposition gegenüber einer Temperatur von 35 °C bis 85 °C für einen Zeitraum von zwei Wochen bewahrt.

14. Beschichtetes Substrat, umfassend gedruckte(n) Text oder Graphik, wobei die hydrophobe Beschichtung gemäß einem der Ansprüche 1 bis 11 über dem/der gedruckten Text oder Graphik aufgebracht ist und die hydrophobe Beschichtung getrocknet und gehärtet ist, wobei die getrocknete und gehärtete hydrophobe Beschichtung vorzugsweise transparent aussieht und keine sichtbare Verringerung der Klarheit und des Kontrasts des/der gedruckten Texts oder Graphik vorliegt oder wobei das Glanzniveau des/der gedruckten Texts oder Graphik auf eine gleichmäßig stumpfe oder matte Ausführung verringert ist, die einen Glanz von weniger als 10 Grad, gemessen in einem Winkel von 60 Grad, aufweist.

15. Verfahren zur Bereitstellung einer hydrophoben bedruckten oder beschichteten Oberfläche, umfassend:

> a) Aufbringen der Tinten- oder Beschichtungszusammensetzung gemäß einem der Ansprüche 1 bis 11 auf ein Substrat;
> b) Trocknen der Zusammensetzung durch trockene Luft, Luftstrom, Ofen oder andere Wärmequellen; und Härten der Zusammensetzung unter Verwendung von aktinischer Strahlung oder einer beliebigen anderen geeigneten Energiequelle;
> wobei die getrocknete und gehärtete Beschichtung klebfrei ist,
> wobei die getrocknete und gehärtete Beschichtung vorzugsweise superhydrophob mit einem Wasserkontaktwinkel von gleich oder größer als 150 Grad ist oder beinahe superhydrophob mit einem Wasserkontaktwinkel von 140 Grad bis 149,9 Grad ist.

**Revendications**

1. Composition de revêtement ou d'encre hybride hydrophobe durcissables par énergie et à base de solvant, comprenant :

> a) un ou plusieurs monomères et/ou oligomères de (méth)acrylate contenant des groupes réactifs insaturés alkyléniques ayant une fonctionnalité moyenne molaire composite alkyléniquement insaturée supérieure à 1,00 ;
> b) des particules de silice traitées en surface par un polydiméthylsiloxane ayant une taille de particule comprise entre environ 1 nm et 30 microns ; et
> c) un ou plusieurs solvants indépendamment choisis dans le groupe constitué par des hydrocarbures aliphatiques, des hydrocarbures cycliques, des hydrocarbures aromatiques, des cétones, des aldéhydes, des alcools, des éthers, des esters, et des combinaisons correspondantes ;
> le rapport de particules de silice sur la teneur en composés organiques non volatils étant de 0,1 : 1 à 4 : 1 ; et
> lorsqu'elle est séchée et durcie, la composition de revêtement ou d'encre possède un angle de contact avec l'eau égal ou supérieur à 110 degrés ;
> l'angle de contact étant mesuré en utilisant un appareil de test d'absorption dynamique et d'angle de contact Fibro DAT 1100 (Fibro Systems AB, Suède), selon la norme ASTM D-5725 Procédure B.

2. Composition de revêtement ou d'encre selon la revendication 1, la composition de revêtement ou d'encre séchée et durcie ayant un angle de décrochement de l'eau inférieur ou égal à 10 degrés ;
l'angle de décrochement étant le plus petit angle de la surface sur laquelle une gouttelette d'eau décrocherait jusqu'au point bas à partir de l'endroit où elle a été déposée, mesuré selon le procédé décrit dans la description.

3. Composition de revêtement ou d'encre selon la revendication 1, le ou les monomères et/ou oligomères réagissant pour former un polymère ayant des sites d'insaturation réactifs alkyléniques, préférablement le polymère ayant des sites d'insaturation réactifs alkyléniques ayant plus de 1 % en moles de sites d'insaturation réactifs alkyléniques.

4. Composition de revêtement ou d'encre selon la revendication 1, le ou les monomères et/ou oligomères ayant une fonctionnalité molaire composite alkyléniquement insaturée supérieure à 1,25, par ex. supérieure à 1,50, supérieure à 1,75, supérieure à 2,00, supérieure à 2,50, supérieure à 2,75, ou supérieure à 3,00.

5. Composition de revêtement ou d'encre selon l'une quelconque des revendications 1 à 4, le ou les monomères et/ou oligomères étant éthyléniquement insaturés, préférablement le ou les monomères et/ou oligomères étant des acrylates et méthacrylate, par ex. le ou les monomères étant indépendamment choisis dans le groupe constitué par le triacrylate de triméthylolpropane, le triacrylate de triméthylolpropane éthoxylé, le triacrylate de pentaérythritol, le triacrylate de glycéryle propoxylé, et le triacrylate de tris-(2-hydroxyéthyl)-isocyanurate, le tétraacrylate de ditriméthylolpropane, le tétraacrylate de pentaérythritol éthoxylé (4), un tétraacrylate de polyester, le tétraacrylate de dipentaérythritol, un ester de pentaacrylate et le tétraacrylate de pentaérythritol, un diacrylate aliphatique alcoxylé, un diacrylate de néopentylglycol alcoxylé, le diacrylate de 1,4-butanediol, le diacrylate de 1,3-butylèneglycol, le diacrylate de cyclohexanediméthanol, le diacrylate de diéthylèneglycol, le diacrylate de dipropylèneglycol, le diacrylate de 1,6-hexanediol, le diacrylate de néopentylglycol, un diacrylate de polyester, un diacrylate de néopentylglycol propoxylé, le diacrylate de néopentylglycol propoxylé (2), le diacrylate de tétraéthylèneglycol, le diacrylate de tricyclodécanediméthanol, le diacrylate de triéthylèneglycol et le diacrylate de tripropylèneglycol, une silicone acrylée, une résine de fluorocarbure acrylée, des alcanes acrylés, les versions de méthacrylate correspondantes, et des combinaisons correspondantes, ou l'oligomère ou les oligomères étant indépendamment choisis dans le groupe constitué par des acrylates de silicone, un acrylate de fluorocarbure, des acrylates d'époxy, des acrylates de polyester, des acrylates éthoxylés, des polyesters insaturés, des acrylates de polyamide, des acrylates de polyimide, et des acrylates d'uréthane, les versions de méthacrylate correspondantes, et des combinaisons correspondantes ; chaque oligomères étant indépendamment monofonctionnel, difonctionnel, trifonctionnel, tétrafonctionnel ou de fonctionnalité supérieure.

6. Composition de revêtement ou d'encre selon la revendication 1, comprenant en outre un ou plusieurs photoinitiateurs, préférablement le ou les photoinitiateurs étant indépendamment choisis dans le groupe constitué par le benzoylformiate de méthyle ; la 1-hydroxycyclohexyl-phénylcétone ; le (2,4,6-triméthylbenzoyl)-phényl-phosphinate d'éthyle et des combinaisons correspondantes.

7. Composition de revêtement ou d'encre selon l'une quelconque des revendications 1 à 6,

   a) le ou les monomères et/ou oligomères étant présents en une quantité de 10 % en poids à 30 % en poids, sur la base du poids total de la composition de revêtement ou d'encre ;
   b) un ou plusieurs photoinitiateurs étant présent en une quantité de 0 % en poids à 10 % en poids, sur la base du poids total de la composition de revêtement ou d'encre ; et
   c) le ou les solvants étant présents en une quantité de 25 % en poids à 85 % en poids, sur la base du poids total de la composition de revêtement ou d'encre.

8. Composition de revêtement ou d'encre selon la revendication 1, le rapport de particules de silice sur la teneur en composés organiques non volatils étant de 0,2 : 1 à 3 : 1, préférablement de 0,2 : 1 à 2 : 1, ou de 0,32 : 1 à 1 : 1.

9. Composition de revêtement ou d'encre selon la revendication 1, la composition étant superhydrophobe, de sorte que l'angle de contact d'une gouttelette d'eau sur la surface de revêtement dépasse 150°, et l'angle de décrochement d'une gouttelette d'eau est inférieur à 10°.

10. Composition de revêtement ou d'encre selon la revendication 1, le revêtement séché et durci présentant l'une des propriétés suivantes :

    (i) un angle de contact avec l'eau égal ou supérieur à 150 degrés, et un angle de décrochement d'eau inférieur ou égal à 10 degrés ;
    (ii) un angle de contact avec l'eau égal ou supérieur à 150 degrés, et un angle de décrochement d'eau inférieur ou égal à 8 degrés ;
    (iii) un angle de contact avec l'eau égal ou supérieur à 140 degrés, et un angle de décrochement d'eau inférieur ou égal à 20 degrés ;
    (iv) un angle de contact avec l'eau égal ou supérieur à 130 degrés, et un angle de décrochement d'eau inférieur ou égal à 20 degrés ;
    (v) un angle de contact avec l'eau égal ou supérieur à 120 degrés, et un angle de décrochement d'eau inférieur ou égal à 20 degrés ;
    (vi) un angle de contact avec l'eau égal ou supérieur à 110 degrés, et un angle de décrochement d'eau inférieur ou égal à 20 degrés ;
    (vii) il maintient son hydrophobicité après exposition à une température de 35 °C à 85 °C pendant une période de deux semaines.

11. Composition de revêtement ou d'encre selon l'une quelconque des revendications 1 à 10, comprenant en outre l'un ou plusieurs parmi les suivants :

    (i) une matière colorante ;
    (ii) une ou plusieurs résines conventionnelles,
    préférablement, la ou les résines conventionnelles étant indépendamment choisies dans le groupe constitué par des résines acryliques, des résines d'urée aldéhyde, une résine de polyester, des résines d'aldéhyde, des résines époxy, des résines d'ester de rosine, un nitrate de cellulose, un acétobutyrate de cellulose, des copolymères de chlorure de vinyle, des résines de mélamine-formaldéhyde, des résines de polyuréthane, des résines de polyimide, des résines d'alkyde, des résines de phtalate, et des combinaisons correspondantes ;

(iii) une ou plusieurs résines conventionnelles et d'autres matières utilisées dans des encres et un revêtement non durcissable(s) par énergie, préférablement, la ou les résines conventionnelles et autres matières utilisées dans des encres et des revêtement non durcissables par énergie étant indépendamment choisies dans le groupe constitué par une huile, le talc, un dispersant de pigment, des véhicules gélifiés, des résines inertes molles, des éthers de polyvinyléthyle, un poly(acrylate de (n-butyle)), et des combinaisons correspondantes ; et

(iii) un ou plusieurs additifs,

préférablement l'additif ou les additifs étant indépendamment choisis parmi des cires, des silicones, des fluorocarbures, l'ammoniac, des antimousses, des stabilisants, des dispersant, des modificateurs rhéologiques, et des combinaisons correspondantes.

12. Substrat revêtu comprenant la composition de revêtement ou d'encre séchée et durcie selon l'une quelconque des revendications 1 à 11, préférablement, le revêtement étant appliqué sur une surface égale ou supérieure à 90 % de la surface du substrat, ou le revêtement étant appliqué sur une surface inférieure ou égale à 50 % de la surface du substrat, ou le revêtement étant appliqué sur une surface inférieure ou égale à 20 % de la surface du substrat.

13. Substrat revêtu selon la revendication 12, une proportion supérieure ou égale à 90 % de la surface revêtue maintenant une hydrophobicité après exposition à une température de 35 °C à 85 °C pendant une période de deux semaines.

14. Substrat revêtu comprenant du texte ou des graphismes imprimé(s), le revêtement hydrophobe selon l'une quelconque des revendications 1 à 11 étant appliqué sur le texte ou les graphismes imprimé(s), et le revêtement hydrophobe étant séché et durci, préférablement, le revêtement hydrophobe séché et durci apparaissant transparent, et il n'y a aucune réduction visuelle de la clarté et du contraste du texte ou des graphismes imprimé(s), ou le niveau de brillance du texte ou des graphismes imprimé (s) étant réduit jusqu'à un fini terne ou mat uniforme, présentant une brillance de moins de 10 degrés mesurée à un angle de 60 degrés.

15. Procédé de fourniture d'une surface imprimée ou revêtue hydrophobe comprenant :

a) l'application de la composition d'encre ou de revêtement selon l'une quelconque des revendications 1 à 11 sur un substrat ;

b) le séchage de la composition par de l'air sec, un flux d'air, un four, ou d'autres sources de chaleur ; et

le durcissement de la composition en utilisant un rayonnement actinique, ou une quelconque autre source d'énergie appropriée ;

le revêtement séché et durci étant non collant, préférablement, le revêtement séché et durci étant superhydrophobe, ayant un angle de contact avec l'eau égal ou supérieur à 150 degrés, ou étant quasi superhydrophobe, ayant un angle de contact avec l'eau de 140 degrés à 149,9 degrés.

EP 3 298 080 B1

Figure 1

$\gamma_{LG}$

$\theta_C$

$\gamma_{SG}$

$\gamma_{SL}$

Figure 2

$\theta_{ro}$

24

**EP 3 298 080 B1**

**REFERENCES CITED IN THE DESCRIPTION**

**Patent documents cited in the description**

- US 62164757
- US 8496857 B
- US 3931428 A
- US 10140212592 A
- US 20090064894 A
- US 8513342 B
- US 8187707 B
- US 6068911 A
- WO 2012156173 A
- WO 2012003004 A
- US 20080156224 A

- US 7943234 B
- WO 2010096073 A
- US 20140309393 A
- WO 0192179 A
- US 20110250376 A
- US 20060286305 A
- WO 2013042052 A
- US 5811472 A
- US 2009064894 A1
- US 2011135905 A1
- WO 2015142558 A1